# EUROPEAN PATENT APPLICATION

(11) **EP 1 992 554 A1**
(43) Date of publication of application: **19.11.2008**
(21) Application number: 08152340.9
(22) Date of filing: 05.03.2008
(51) Int. Cl.: B62K 3/00

(54) **Modular bicycle**

(30) Priority: 06.03.2007 NL 1033504
(71) Applicant: Koninklijke Gazelle B.V., 6951 BP Dieren (NL)
(72) Inventor: Jansen, Angelo, 4551 GE Sas van Gent (NL); Schoonhoven, Jorrit, 4551 GE Sas van Gent (NL)
(74) Representative: Hatzmann, Martin

(57) **Abstract**

The invention relates to a bicycle (1), comprising a frame for supporting a cyclist, a drive module (3) for driving the bicycle and receiving means for receiving a front frame (7) pivotable relative to the frame. The bicycle further comprises a covering element which encloses at least a part of a frame in a detachable manner.

## Description

The invention relates to a modularly constructed bicycle.

Modularly constructed bicycles are known, for instance as folding bicycle, for compactly storing such a bicycle. From patent publication NL 1009314 for instance, a modularly constructed bicycle is known wherein, in an operative position, separate parts are rigidly attached to each other and are pivoted relative to each other in a storage position, so that a compact packet is obtained.

In addition to folding bicycles, numerous other categories of bicycles are offered on the market, such as city bikes, touring bikes, racing bikes, children's bikes, mountain bikes, all terrain bikes, etc. Parts that are utilized here, such as the weight and the strength of the frame, are typically geared to a specific category of bicycles. Also, an all round bicycle manufacturer often has, apart from the sizes, only a limited selection of actual types of bicycles.

The modern, critical consumer has the need for a more varied range of bicycles.

The object of the invention is to obtain a modularly constructed bicycle with which the above-mentioned drawback is obviated. The object of the invention is in particular to obtain a modularly constructed bicycle enabling a more varied supply. To that end, the bicycle according to the invention comprises a basic module for supporting a cyclist, a drive module detachably coupled to the basic module for driving the bicycle, and a steering module, comprising a frame element, detachably, rigidly coupled to the basic module, that comprises receiving means for receiving a front frame pivotable relative the frame element.

By detachably coupling to each other a basic module, a drive module and a steering module, while a frame element provided on a steering module is rigidly coupled to the basic module, which frame element further comprises receiving means for receiving a front frame pivotable relative to the frame element, a modular bicycle is obtained with which, through exchange of modules, in a simple manner, a wide range of models of bicycles is possible.

A bicycle can thus be composed in a more flexible manner, if desired in accordance with specific wishes of a client. It is even possible to offer the bicycle modularly, i.e. different designs of basic modules, drive modules and steering modules, so that specific modules can be selected as desired for composing a desired bicycle. Modules with mutually different sizes can, in principle, also be detachably coupled to each other for obtaining a specific bicycle made to size.

Through the use of a steering module with a frame element to be rigidly coupled to the basic module, comprising receiving means for receiving a front frame pivotable relative thereto, the functionality of the steering module, such as steering behaviour depending on the angle of inclination of the steering pin and/or suspension behaviour of a front wheel, can be implemented virtually independently of the basic module, while assembly of the steering module on the basic module can be carried out in a relatively simple manner.

Further, a specific module, for instance a basic module for supporting a cyclist, can be deployed for a multiple number of categories of bicycles, for instance for a mountain bike as well as for a city bike. By thus creating a wide use of a specific module, production costs can decrease. Furthermore, modules can be separately developed further and be used in new bicycle models. In addition, modules can be manufactured at different locations and with different techniques, which opens perspectives of flexibility with regard to suppliers and cost reduction.

Furthermore, the modular structure of the bicycle according to the invention also offers the advantage that transport from a production site to a buyer, such as a dealer, can take place more easily because individual modules have smaller dimensions than an integral bicycle. Further, storage can be carried out more easily and efficiently.

In addition, after purchase, a user of the bicycle can, if desired, change the appearance and/or the performance of the bicycle considerably by replacing only one or two modules. The bicycle according to the invention also offers the advantage that irreparable damage to a frame part can be overcome by replacing the respective module, so that the bicycle can be repaired all the same.

Through the use of a frame that is at least partly formed as an extrusion profile, a rigid whole can be obtained that, nevertheless, is light. The extrusion profile can further form a coupling element for detachably coupling the drive module and/or the steering module to the basic module, so that a very rapid assembly of the modular bicycle is possible. In addition, the extrusion profile can be utilized for coupling other parts to the frame. The extrusion profile can furthermore be used for frame parts with different sizes, for instance for a specific length and/or height.

For manufacturing an extrusion profile, preferably, aluminum is usable as material. In principle however, other materials can be used too. Further, also, cast profiles or profiles formed otherwise can be used, such as a tube frame, optionally while using other materials such as corrosion resistant steel and/or carbon.

In an advantageous manner, the modularly constructed bicycle can further comprise a covering element which encloses at least a part of a frame in a detachable manner. As a result, the appearance of the bicycle can be designed as desired, for instance with contemporary color combinations and/or prints, so that a special, personalized bicycle is obtained. This increases the variety of bicycle models considerably, while the technical platform formed by frame parts can remain completely unchanged or practically unchanged.

Further, such a covering element can be replaced during the life span so that a completely new appearance is obtained. For instance, the modular bicycle according to the invention can, during the life span, be provided once or several times with a new appearance, for instance when the bicycle passes to a second user. Damage to the covering element can also be remedied relatively simply by replacing the element by another, undamaged specimen.

It is noted that frame parts can also be designed without covering element, for instance for saving weight.

The invention further relates to a kit.

The invention also relates to a method for manufacturing a modularly constructed bicycle.

Further advantageous embodiments of the invention are represented in the subclaims.

The invention will be further elucidated on the basis of exemplary embodiments represented in the drawing. In the drawing:
Fig. 1 shows a schematic, perspective view of a first embodiment of a modularly constructed bicycle according to the invention;
Fig. 2 shows a schematic side view of modules of a second embodiment of a bicycle to be modularly constructed according to the invention;
Fig. 3a shows a schematic perspective top plan view of a basic module, drive module and steering module for forming a third embodiment of a modularly constructed bicycle according to the invention in an uncoupled condition;
Fig. 3b shows a schematic perspective bottom view of the modules shown in Fig. 3a;
Fig. 4a shows a schematic perspective view of a few details of the basic module and the drive module of Fig. 3a;
Fig. 4b shows a schematic perspective view of a few details of the basic module and the drive module of Fig. 3b;
Fig. 5 shows a schematic perspective view of a basic module, drive module and steering module for forming a fourth embodiment of a modularly constructed bicycle according to the invention;
Fig. 6 shows a schematic perspective view of a basic module for forming a fifth embodiment of a modularly constructed bicycle according to the invention; and
Fig. 7 shows a schematic perspective view of a luggage carrier for assembly on a modularly constructed bicycle according to the invention.

The Figures are only schematic representations of preferred embodiments of the invention. In the Figures, identical or corresponding parts are indicated with the same reference numerals.

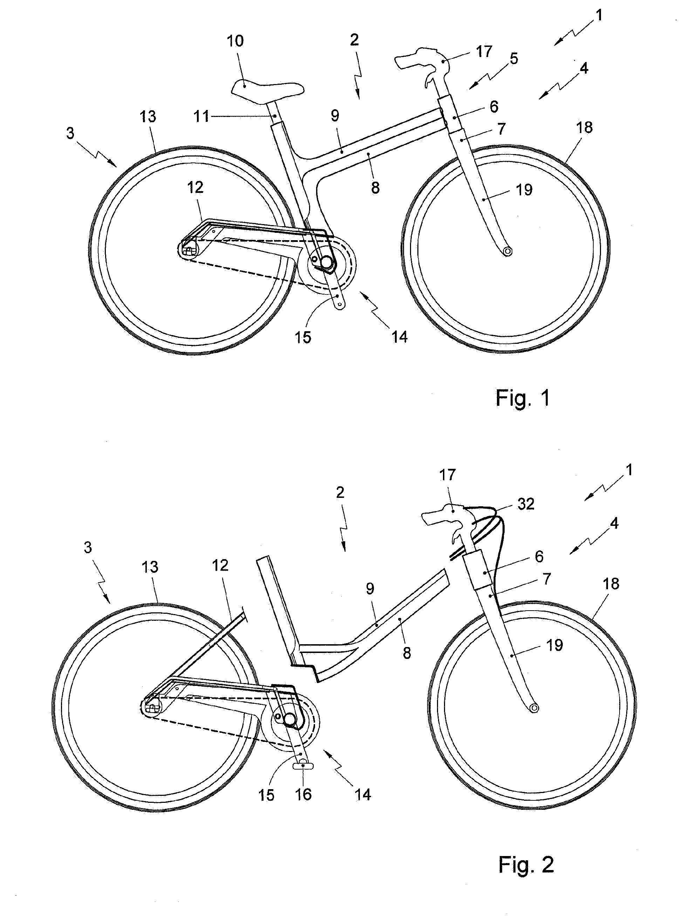

Fig. 1 shows a schematic view of a first embodiment of a modularly constructed cycle 1, a bicycle, according to the invention. The bicycle 1 comprises a basic module 2 for supporting a cyclist. The bicycle 1 also comprises a drive module 3 for driving the bicycle 1. In addition, the bicycle comprises a steering module 4 comprising a frame element 5 provided with receiving means, among which a steering head 6, for receiving a front frame 7 pivotable at least relative to the frame element 5.

The drive module 3 is detachably coupled to the basic module 2. The frame element 5 of the steering module 4 is detachably, rigidly coupled to the basic module 2 so that the front frame 7 is also pivotable relative to the basic module 2 on which the cyclist can be seated.

The basic module 2 comprises a basic frame that is concealed behind covering elements 8, 9 and is provided with attachment means for attaching a saddle 10 on which the cyclist can be seated. The attachment means are designed as a saddle pin 11, a cylindrical cavity 21 (not shown in Fig. 1) in a substantially vertically extending frame part 22 (also not shown in Fig. 1) of the basic frame in which the saddle pin 11 is at least partly accommodated, and clamping elements for securing the saddle pin 11 in the cylindrical cavity.

The drive module 3 comprises a rear frame 12 for carrying a rear wheel 13 and a drive unit 14 for driving the rear wheel 13. The drive unit 14 comprises a crank shaft to which cranks 15 with pedals 16 (not shown in Fig. 1) are attached. The drive unit 14 further comprises a transmission unit, for instance a chain transmission from the crank shaft to the axle of the rear wheel 13.

The front frame 7 comprises attachment means for attaching a steering handle 17, and is designed for carrying a front wheel 18. To that end, the front frame 7 has a fork 19 which is attached to a bearing mounted axle of the front wheel 18.

Fig. 2 shows a schematic side view of other models of the basic module 2, the drive module 3 and the steering module 4, respectively, of a second embodiment of a bicycle 1 to be modularly constructed according to the invention. The separate modules 2, 3, 4 are shown in uncoupled condition.

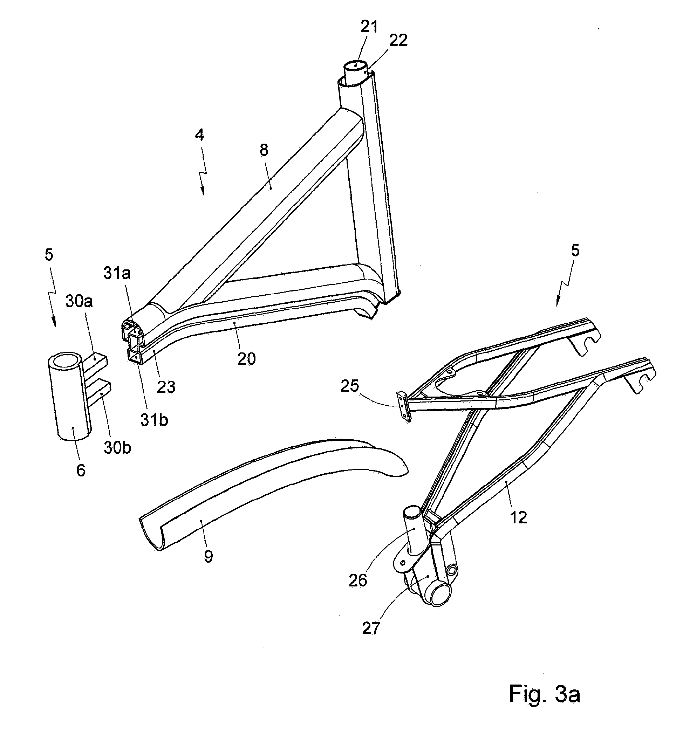

Fig. 3a too shows yet again other models of the basic module, the drive module and the steering module 4 for forming a third embodiment of a modularly constructed bicycle 1 according to the invention. A lower covering element 9 of the basic frame 20 is shown in disassembled condition, so that the structure of the basic frame 20 is visible. The basic frame comprises an aluminum extruded profile 23 designed for obtaining a sufficiently rigid and strong frame that is furthermore relatively light.

The covering elements 8, 9 each enclose at least a part of the basic frame 20 so that a desired color combination, optionally with printing and/or a specific design of the bicycle 1 can be obtained. The covering elements 8, 9 are preferably manufactured from plastic and dimensioned such that they can be attached to the frame 20 with a snap connection. Thus, a covering of the frame 20 is obtained that can be inexpensively manufactured and provided in a simple, detachable manner. Naturally, the covering elements 8, 9 can also be composed of other materials, for instance metal and/or be attached to the frame 20 with a different type of connection, for instance with a screw connection.

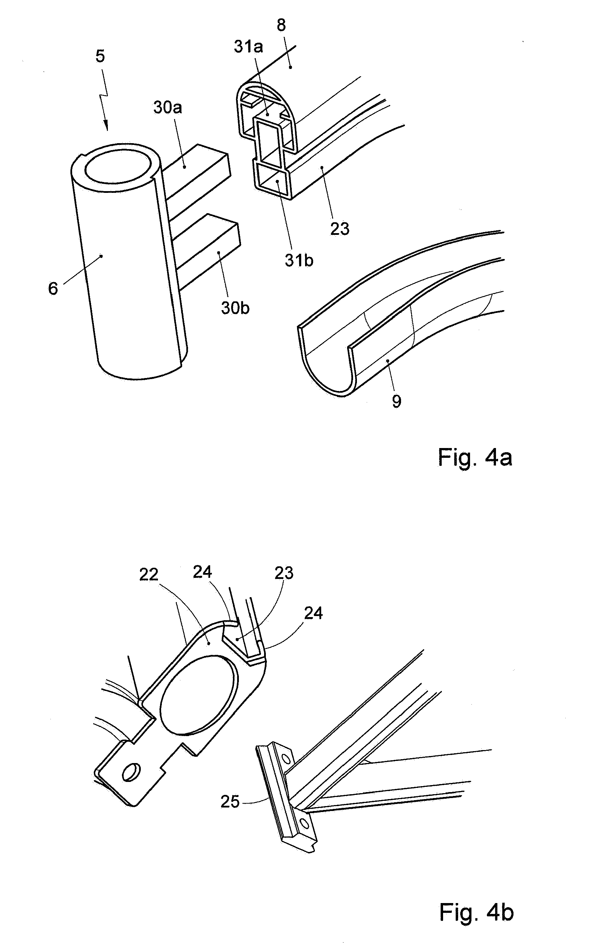

Fig. 4a shows a schematic perspective view of a few details of the basic module 2 and the steering module 3 of Fig. 3a. The frame element 5 of the steering module 4 has a steering head 6 and two male coupling elements 30a, 30b which cooperate, during detachable coupling of the steering module 4 to the basic module 2, with corresponding, female coupling elements 31a, 31b that are formed by openings defined by the extrusion profile 23 of the basic frame 20. In a coupled condition, the coupling elements 30a, 30b, 31a, 31b are secured relative to each other with a securing construction. In particular through the use of two male coupling elements and two female coupling elements corresponding therewith, that together, form two coupling pairs, a rigid coupling can be obtained which, in principle, can be rapidly and safely realized and discontinued. It is noted that the detachable coupling between the steering module 4 and the basic module 2 can also be realized differently, for instance with screw connections.

Optionally, the distance between the frame element 5 and the basic module 2 is adjustable, for instance through an adjustable design of the securing construction. As a result, a specific dimensioning can be realized. Preferably, the basic module 2 and/or the frame element 5 is provided with a calibration so that a standard size can be set in a simple manner.

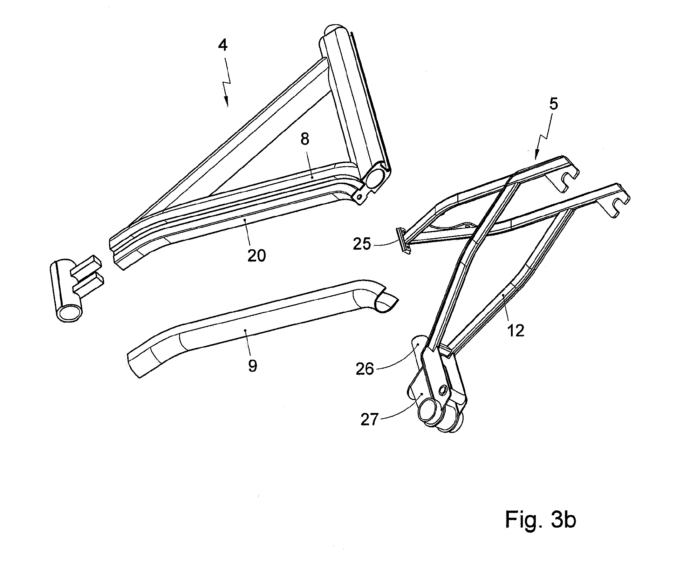

Also the frame part 22 of the basic frame 20, extending substantially vertically, comprises an extrusion profile of which an outwardly extending part forms a channel 23 with clamping fingers 24, see in particular Figs. 3b and 4b. The rear frame 12 is provided with a slide part 25 which, during the assembly of the drive module 3 to the basic module 2, is slid into the channel 23 to be clampingly included, so that, with the aid of the channel structure 23 and the clamping fingers 24, the drive module 3 is detachably coupled to the basic module 2. Thus, a very rapid and elegant coupling construction is obtained for detachably coupling the drive module 3 to the basic module 2. Naturally, other couplings are also a possibility, such as with the aid of screw connections.

The drive module 3 further comprises a pin 26 that reaches into a tubular opening of the substantially vertically extending frame part 22 of the basic frame 20, for securing the drive module 3 on the basic module 2. The rear frame comprises a carrier module 27 for carrying the drive unit 14 of the bicycle 1.

The basic module 2, the drive module 3 and steering module 4 can be manufactured, stored and transported separately, and be assembled at a point of sale or even by a consumer.

One or more cables for operating functions of the bicycle 1, such as brake cables and/or gear cables 32 are provided along one or more exteriors of one or more frame parts, preferably between a frame part and a covering element 8, 9, so that the cables suffer less from weather conditions. Furthermore, concealed cables improve the appearance of the bicycle 1.When using an extrusion profile 23, such cables can be advantageously accommodated in open channels at the exterior of the profile. However, it is also possible to provide the cables in the interior of frame parts, for instance through a closed channel of the extrusion profile. Further, the cables can be guided along the exterior of a covering element.

It is noted that a cable for operating functions of the bicycle, with the cable provided along an exterior of a frame part, preferably between a frame part and a covering element, can be utilized not only in combination with a modularly constructed bicycle according to claim 1, but also, more generally, with a bicycle comprising a frame for supporting a cyclist, a drive module for driving the bicycle and receiving means for receiving a front frame pivotable relative to the frame.

The Figures show different types of modules, for instance different basic frame geometries. The drive modules too can be designed differently, for instance with chain drive, optionally with shiftable sprockets, cardan drive, drive supported by electric motor, and with various brake systems. Also, the steering module can be implemented differently, for instance with different brake systems or with a specific front fork that meets diverse requirements, such as with respect to rigidity or comfort. Thus, by selecting and assembling a specific model for each of the basic modules, drive modules and steering modules, a wide range of modularly constructed bicycles can be obtained.

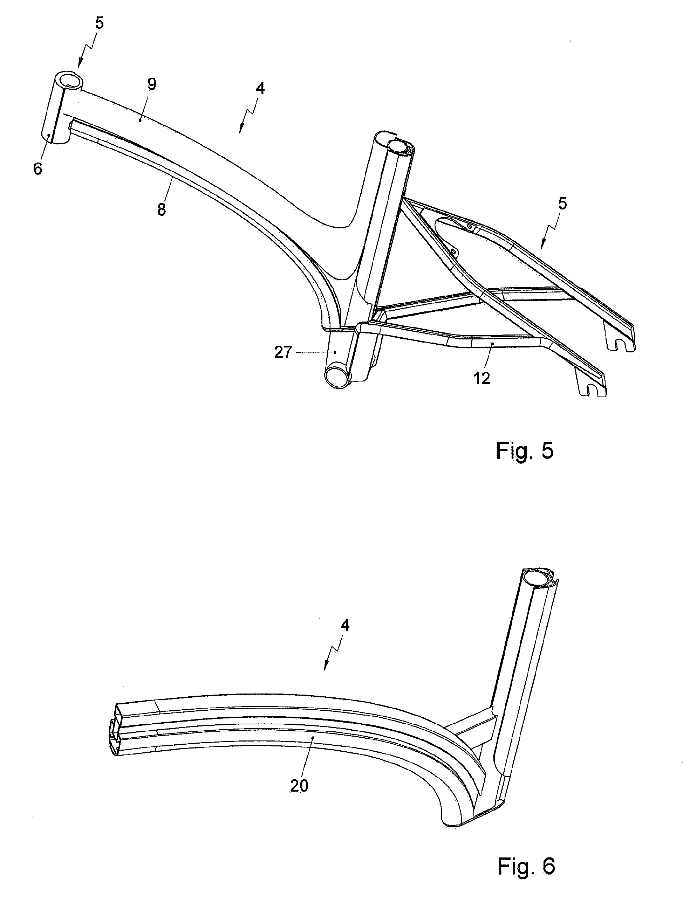

Fig. 5 shows a schematic perspective view of a detachably coupled basic module 2, drive module 3 and steering module 4 for forming a fourth embodiment of a modularly constructed bicycle 1 according to the invention. Further, Fig. 6 shows another basic module 4, for forming a fifth embodiment of a modularly constructed bicycle 1 according to the invention. In particular the geometry of the basic frames 2 in Figs. 5 and 6 is different. The basic module 2 of Fig. 5 is, for instance, typically suited for a gents' bicycle, while it is more readily apparent to assemble the basic module 2 of Fig. 6 into a ladies' bicycle. The orientation of the extrusion profile 23 in the basic modules 4 of Figs. 5 and 6 is exchanged. The extrusion profile 23 is designed such that the female coupling elements 31a, 31b can cooperate in both orientations with the male coupling elements 30a, 30b of the frame element 5 of the steering module 4.

The composite modules as shown in Figs. 5 and 6 can be constructed in further assembly steps for forming a complete bicycle as desired, as shown in, for instance, Figs. 1 and 2. In principle, it is however possible to detachably couple to each other a completely constructed basic module, drive module and steering module for obtaining a modularly constructed bicycle according to the invention.

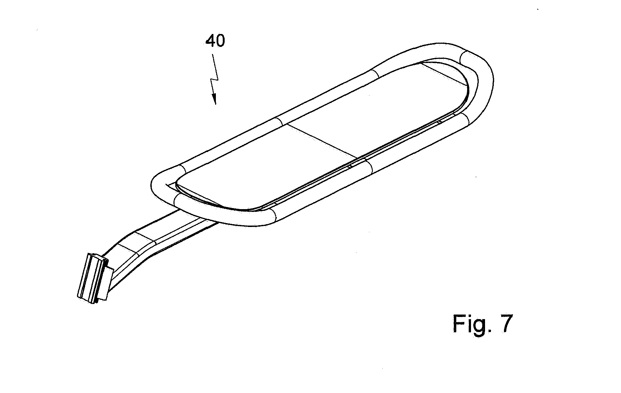

Fig. 7 shows a schematic perspective view of a luggage carrier 40 for assembly on a modularly constructed bicycle 1 according to the invention. To this end, the luggage carrier 40 comprises a slide part that can be clampingly received in the channel of the basic frame 12, in a manner comparable to the coupling of the drive module 3 to the basic module 2. Naturally, other accessories too, such as mudguards and/or lighting units can be attached to a frame in such a manner. An attachment of accessories can, for that matter, also be carried out differently, for instance with a screw connection.

The invention is not limited to the exemplary embodiment described here. Many variations are possible.

For instance, for carrying a front or rear wheel, respectively, instead of a fork, a single carrier arm can be utilized.

In addition, it is noted that, in accordance with the invention, not only bicycles, but also other cycles, such as mopeds, tandem bicycles and tricycles can be constructed modularly.

Such variants will be clear to the skilled person and are understood to fall within the range of the invention, as set forth in the following claims.

## Claims

1. A bicycle, comprising a frame for supporting a cyclist, a drive module for driving the bicycle and receiving means for receiving a front frame pivotable relative to the frame, further comprising a covering element which encloses at least a part of a frame in a detachable manner.

2. A bicycle according to claim 1, further comprising a cable for operating functions of the bicycle, wherein the cable is provided along an exterior of a frame part, preferably between a frame part and a covering element.

3. A bicycle according to claim 1 or 2, comprising a basic module for supporting a cyclist, wherein the drive module is detachably coupled to the basic module, and a steering module comprising a frame element, detachably, rigidly coupled to the basic module, comprising the receiving means for receiving a front frame pivotable relative to the frame element.

4. A bicycle according to any one of the preceding claims, wherein the basic module comprises a basic frame provided with attaching means for attaching a saddle.

5. A bicycle according to any one of the preceding claims, wherein the drive module comprises a rear frame for carrying both a rear wheel and a drive unit for driving the rear wheel.

6. A bicycle according to any one of the preceding claims, wherein the front frame comprises attaching means for attaching a steering handle, and is designed for carrying a front wheel.

7. A bicycle according to any one of the preceding claims, wherein a frame is at least partly formed as an extrusion profile.

8. A bicycle according to any one of the preceding claims, wherein the frame element is detachably, rigidly coupled to the basic module with the aid of a coupling comprising a female coupling element and a male coupling element cooperating with the female coupling element.

9. A bicycle according to any one of the preceding claims, wherein the distance between the frame element and the basic module is adjustable.

10. A bicycle according to any one of the preceding claims, wherein the drive module is detachably coupled to the basic module by means of a channel provided on the basic frame, in which a slide part provided on the rear frame is clampingly included.

11. A bicycle according to any one of the preceding claims, further comprising an accessory which is provided with a slide part that is clampingly included in the channel of the basic frame.
